# EUROPEAN PATENT SPECIFICATION

(11) **EP 2 184 584 B1**
(45) Date of publication and mention of the grant of the patent: **18.04.2012**
(21) Application number: 09013579.9
(22) Date of filing: 28.10.2009
(51) Int. Cl.: B60W 50/08, B60W 10/26, B60W 10/30, B60L 11/14, B60L 11/18

(54) **Travel support system, method, and program**
System, Programm und Verfahren zur Reisehilfe
Système, procédé et programme d'assistance de voyage

(30) Priority: 11.11.2008 JP 2008288457
(43) Date of publication of application: 12.05.2010
(73) Proprietor: AISIN AW CO., LTD., Anjo-shi, Aichi-ken 444-1192 (JP)
(72) Inventor: Kato, Kazuya c/o Aisin AW Co., Ltd., Anjo-shi, Aichi-ken, 444-1192 (JP)
(74) Representative: Kramer - Barske - Schmidtchen

(56) References cited:
- EP-A1- 1 935 712
- EP-A2- 1 256 476
- WO-A1-2005/007444
- DE-A1-102008 021 045
- US-A1- 2007 193 792

## Description

The present invention relates to a travel support system, method, and program for a vehicle having a rechargeable battery.

In late years, there has been developed a vehicle capable of traveling using electric power stored in a rechargeable battery. The remaining power amount in the rechargeable battery can be grasped as a state of charge (SOC), but it is difficult to directly see how the vehicle can be operated for traveling using this remaining power amount. Accordingly, a technique to estimate a travelable distance in EV mode based on the remaining power amount (SOC) is known (for example, see Japanese Patent Application Publication No. 2008-120333).

In Japanese Patent Application Publication No. 2008-120333, the travelable distance is reckoned by the current remaining power amount in the rechargeable battery, and thus certain criteria can be provided for traveling of the vehicle thereafter. However, a situation using an electrical component such as an air conditioner driven by consuming the remaining power amount in the rechargeable battery is not considered in the travelable distance in the Japanese Patent Application Publication No. 2008-120333. Therefore, when traveling to a predetermined point (or a section to the predetermined point), the user of the vehicle is unable to recognize the availability of electrical components driven by consuming the remaining power amount in the rechargeable battery. Another control device of a vehicle is known from US 2007/0193792 A1. An energy management system for electrically driven vehicles is known from DE 10 2008 021045 A1.
The present invention is made in view of the above problem, and an object thereof is to provide a technique for allowing recognition of whether or not a desired section can be traveled by the rechargeable battery while using electrical components.
This object is achieved by a travel support system according to claim 1, a travel support method according to claim 6 and a travel support program according to claim 7.
Further developments of the invention are given in the dependent claims.

According to a first aspect of the present invention, an excess power amount of a rechargeable battery when a predetermined section is traveled is obtained based on a required power amount needed for traveling the predetermined section and a current remaining power amount in a rechargeable battery, and information indicating the availability of an electrical component of the vehicle while traveling the predetermined section is introduced based on the excess power amount. Therefore, based on the introduced information, the user can recognize whether the electrical components are available or not while traveling the predetermined section by the remaining power amount in the rechargeable battery.

Here, a required power amount obtaining unit just needs to obtain a required power amount needed for traveling a predetermined section in the vehicle, and just needs to identify the required power amount for traveling the predetermined section based on the electric power needed for driving the drive source of the vehicle, excluding power not contributing to driving of the drive source of the vehicle (it is possible for the vehicle to travel without consuming this power). For example, the number of revolutions and torque of the transmission shaft of the vehicle may be obtained by actual measurement or estimation, so as to calculate the required power amount. Further, the required power amount may be calculated based on parameters such as a vehicle speed and a gradient on a route to be traveled and the weight of the vehicle, and various techniques can be adopted. The predetermined section just needs to be a section between two arbitrary points which the vehicle may travel from the present moment, and may be a route when traveling from the current position of the vehicle to a destination, or a section (link or the like) set between two arbitrary points in the above-described route.

A remaining power amount obtaining unit just needs to obtain a current remaining power amount in the rechargeable battery. It is possible to represent the remaining power amount by various parameters (SOC, voltage, current, pH of electrolyte layer, and the like) related to the rechargeable battery corresponding to the remaining power amount.

An excess power amount obtaining unit just needs to obtain an excess power amount in the rechargeable battery when the predetermined section is traveled. Specifically, the unit just needs to obtain as the excess power amount an electric power amount available for other than driving the drive source of the vehicle when traveling the predetermined section in the vehicle. Therefore, the excess power corresponds mainly to the remaining power amount minus the required power amount. However, when there is a lower limit value of the remaining power amount in the rechargeable battery, the excess power amount is the remaining power amount minus the required power amount minus the lower limit value. Of course, when the remaining power amount is increased by regeneration in a hybrid vehicle or the like, the power amount to be increased by regeneration while traveling the predetermined section may be estimated and added to the remaining power amount or the excess power amount.

An introduction unit just needs to identify the availability of the electrical components while traveling the predetermined section, based on the excess power amount, and introduce information indicating the availability. The information indicating the availability just needs to indicate directly or indirectly that at least one of the electrical components are available or unavailable while traveling a predetermined section in the vehicle. For example, it is possible to adopt an arrangement to identify an electrical component that is available by the excess power amount among the electrical components mounted in the vehicle, and introduce the name and the available time thereof. With this introduction, it is possible to clearly introduce an available electrical component while traveling a predetermined section. Of course, there may be introduced the name of an electrical component which is unavailable by the excess power amount and the unavailable time (time interval in which the electrical component must not be used while traveling).

On the other hand, the information indicating the availability of the electrical component indicates the availability of the electrical components when traveling a predetermined section in the vehicle, and thus is related to this predetermined section. Therefore, the information indicating the availability of the electrical component may be introduced in association with a predetermined section. For example, there may be introduced that traveling of a predetermined section will be completed without occurrence of insufficiency in remaining power amount in the rechargeable battery when a specific electrical component is not used within the predetermined section, or that the remaining power amount in the rechargeable battery will be insufficient when a specific electrical component is used in the predetermined section.

Furthermore, it may be arranged to introduce information indicating the availability of the electrical component indirectly by introducing a predicted transition of the excess power amount. For example, the power consumption of an arbitrary electrical component can be identified based on specifications, actual measurement, or the like. Based on the power consumption, it is possible to identify the power consumption amount when a currently used electrical component continues to be used from the present moment. Further, a required power amount for driving the drive source of the vehicle is not included in the excess power amount, and thus the predicted transition of the excess power amount can be identified by subtracting the power consumption amount of the electrical component at each time in the future from the excess power amount. Accordingly, when the predicted transition of this excess power amount is introduced, the user can recognize when the excess power amount becomes insufficient when the currently used electrical component continues to be used from the present moment. Therefore, the availability of this electrical component while traveling a predetermined section can be introduced indirectly.

Furthermore, there may be adopted an arrangement to introduce an electrical component which can continue to be used by the excess power amount out of the electrical components while traveling the predetermined section in the vehicle. With this arrangement, it is possible to clearly show the user an available electrical component while traveling a predetermined section (the traveling of the predetermined section can be completed even when this component continues to be used).

Furthermore, it may be arranged that priority is associated with the electrical components in advance, a combination of the electrical components is made in order from the electrical component with high priority, and there are introduced for the combination whether all the electrical components included in the combination can continue to be used or not by the excess power amount. With this arrangement, it is possible to clearly show the user how many electrical components in order of priority can be driven by the excess power amount when traveling a predetermined section. Incidentally, the priority just needs to be determined in advance, and may be determined for example by the user in advance, or high priority may be given in order from one having a high frequency of use by the user. The priority may be defined in advance to vary depending on the season, time, or the like (such that the air conditioner is given highest priority in summer). Thus, various arrangements can be adopted.

Furthermore, it may be arranged that for a combination of plural electrical components selected by the user, information indicating the availability while traveling a predetermined section is introduced. Specifically, it is arranged to accept selection of arbitrary electrical components by the user's operation, and introduce that all the electrical components included in the accepted combination are available while traveling a predetermined section, a part thereof is available or unavailable, or the like. This arrangement enables the user to select an available electrical component while traveling the predetermined section.

Incidentally, as in the first aspect of the present invention, the technique to introduce information indicating the availability of the electrical component of a vehicle while traveling a predetermined section based on the excess power amount in the rechargeable battery is also applicable as a program or method to perform this processing. Further, the travel support system, method, and program as described above may be realized as a single apparatus, may be realized using parts common to units provided in the vehicle, or may be realized in cooperation with parts which are not mounted in the vehicle. Thus, various modes are included. Further, changes can be made as appropriate, such as a part is software and another part is hardware. Furthermore, the invention also comes into effect as a storage medium of a program controlling the travel support system. Of course, the storage medium of this software may be a magnetic recording medium or a magneto-optical recording medium. Any kind of recording medium developed in the future can be considered exactly in the same manner.
Further features and usabilities follow from the description of embodiments referring to the drawings, of which:
FIG 1 is a block diagram showing a travel support system;
FIG 2 is a flowchart showing travel support processing;
FIG 3 is a flowchart showing power amount calculation processing;
FIGS. 4A and 4B are diagrams showing examples of introduction; and
FIGS. 5A and 5B are diagrams showing examples of introduction.

Embodiments of the present invention will now be described according to the following order.
(1) The structure of a travel support system
(2) Travel support processing
(3) Other embodiments

### (1) The structure of a travel support system

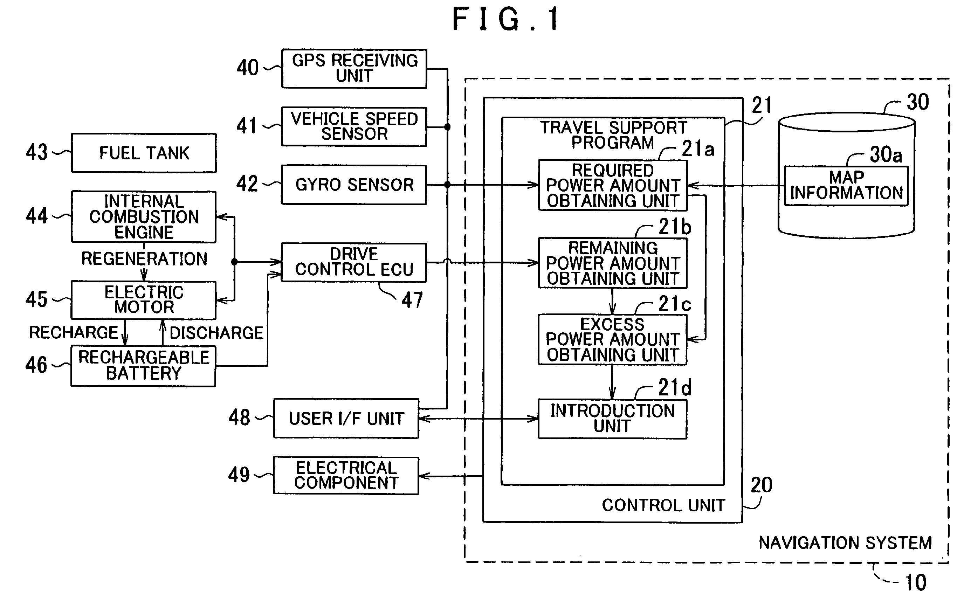

FIG. 1 is a block diagram showing the structure of a travel support system mounted in a vehicle. The travel support system in this embodiment is realized by a navigation system 10. The navigation system 10 includes a control unit 20 having a CPU, a RAM, a ROM, and so on, and a storage medium 30, and programs stored in the storage medium 30 or the ROM can be executed by the control unit 20. In this embodiment, as one of the programs, a travel support program 21 can be executed. In the vehicle, the following units (40 to 49) are provided for realizing a function to introduce, by the travel support program 21, information indicating the availability of electrical components while traveling a predetermined section.

A global positioning system (GPS) receiving unit 40 receives radio waves from a GPS satellite and outputs a signal for calculating the current position of the vehicle and a signal indicating the current time via an interface (not shown). The control unit 20 receives these signals and obtains the current position of the vehicle and the current time. A vehicle speed sensor 41 outputs a signal corresponding to the rotation speed of wheels of the vehicle. The control unit 20 obtains this signal via an interface (not shown) and obtains the speed of the vehicle. A gyro sensor 42 detects the angular acceleration with respect to a turn of the vehicle within a horizontal plane, and outputs a signal corresponding to the direction of the vehicle. The control unit 20 obtains this signal via the interface (not shown) and obtains the traveling direction of the vehicle. The vehicle speed sensor 41 and the gyro sensor 42 are used for correcting the current position of the vehicle identified from the output signal of the GPS receiving unit 40. Further, the control unit 20 corrects the current position of the vehicle as appropriate by checking with map information 30a, which will be described later.

The vehicle of this embodiment is a hybrid vehicle having, as drive sources, an internal combustion engine 44 whose power source is fuel stored in a fuel tank 43, and an electric motor 45 whose power source is a rechargeable battery 46. The internal combustion engine 44 and the electric motor 45 are coupled to a power transmission mechanism (not shown). By converting rotational driving force into driving force of the vehicle by the power transmission mechanism, the vehicle is driven. The vehicle is capable of being driven by either or both of the internal combustion engine 44 and the electric motor 45. Further, it is arranged that a part of the rotational driving force generated by the internal combustion engine 44 is transferred to the electric motor 45 as regenerated energy. When this happens, the electric power generated by the electric motor 45 is stored in the rechargeable battery 46.

The internal combustion engine 44 and the electric motor 45 are controlled by a drive control ECU 47. The drive control ECU 47 is capable of outputting control signals to the internal combustion engine 44 and the electric motor 45, and outputs control signals to the internal combustion engine 44 and the electric motor 45 for controlling either or both of the internal combustion engine 44 and the electric motor 45 to generate rotational driving force. Therefore, in this embodiment, driving or stopping the internal combustion engine 44, charging by the electric motor 45, or driving the electric motor 45 by discharge of the rechargeable battery 46 is selected by the control signals outputted by the drive control ECU 47. Further, the drive control ECU 47 obtains a remaining power amount [%] (SOC: State Of Charge) from the rechargeable battery 46 and notifies the control unit 20 of the remaining power amount.

A user I/F unit 48 is an interface unit for inputting an instruction from the user or providing the user with various information, and includes a touch panel display, a switch, a speaker, and so on which are not shown. The user can operate this user I/F unit 48 so as to set a destination in the navigation system 1. Further, the control unit 20 introduces information indicating the availability of the electrical components by the user I/F unit 48. An electrical component 49 is equipment driven by electric power stored in the rechargeable battery 46 and, in this embodiment, includes an audio unit (electrical component 1), a cool box (electrical component 2), and an air conditioner (electrical component 3). Further, the control unit 20 is capable of controlling the electrical component 49 via an interface (not shown), and can identify the state of use thereof.

By executing the travel support program 21, the control unit 20 performs processing for introducing information indicating the availability of the electrical components of the vehicle while traveling a predetermined section. For this purpose, the travel support program 21 has a required power amount obtaining unit 21a, a remaining power amount obtaining unit 21 b, an excess power amount obtaining unit 21c, and an introduction unit 21d. In the storage medium 30, map information 30a is stored in advance. The map information 30a includes node data indicating nodes set on a road where the vehicle travels, shape interpolation point data for identifying the shape of a road between nodes, link data indicating coupling of nodes to each other, gradient data indicating gradients of roads, gradient change point data representing points where a gradient changes, data indicating features existing on a road and in the vicinity thereof, and so on. The map information is used for searching for a route to a destination (in this embodiment, a section from the current position to a destination corresponds to the predetermined section) from the current position of the vehicle, and for performing a route guidance or the like.

The required power amount obtaining unit 21a is a module for the control unit 20 to realize a function to obtain a required power amount needed for traveling a predetermined section in the vehicle. That is, the control unit 20 identifies the current position of the vehicle based on output signals of the GPS receiving unit 40, the vehicle speed sensor 41, the gyro sensor 42, and the like, and identifies a destination based on operation input by the user to the user I/F unit 48. Then the control unit 20 performs a route search from the current position to the destination based on the map information 30a, and identifies a route from the current position to the destination (a predetermined section). Incidentally, the route may be changed according to variation of the current position of the vehicle.

Furthermore, the control unit 20 obtains the gradient of each road section forming the route from the map information 30a, predicts the vehicle speed when the vehicle travels the road section, and obtains required energy for traveling the road section with this gradient at this vehicle speed. Then the control unit obtains the required power amount in the rechargeable battery 46 for driving the electric motor 45 by the rechargeable battery 46 (traveling in EV mode) to output this energy. Further, the control unit adds up the obtained required power amounts for all the road sections, and obtains required power amounts when traveling a route from the current position to the destination with the electric power of the rechargeable battery 46 being the power source.
The remaining power amount obtaining unit 21 b is a module for the control unit 20 to realize a function to obtain the remaining power amount (SOC) in the rechargeable battery 46.

The excess power amount obtaining unit 21c is a module for the control unit 20 to realize a function to obtain an excess power amount of the rechargeable battery 46 when traveling the route from the current position to the destination, based on the required power amount and the remaining power amount. Incidentally, a lower limit value of the remaining power amount is set in the rechargeable battery 46 in this embodiment. Thus, the excess power amount in the rechargeable battery 46 is obtained for using the rechargeable battery 46 in a manner that the remaining power amount in the rechargeable battery 46 is always higher than the lower limit value.

The introduction unit 21d is a module for the control unit 20 to realize a function to introduce information indicating the availability of the electrical component 49 while traveling the route from the current position to the destination, based on the excess power amount. That is, the control unit 20 identifies the power consumption of the electrical component 49, and determines whether or not electric power can be kept supplied to the electrical component 49 while traveling the route from the current position to the destination by the excess power amount. Then the control unit outputs a control signal to the user I/F unit 48 for outputting information indicating the availability of the electrical component 49. As a consequence, the user can recognize whether it is possible or not to travel the predetermined section by the rechargeable battery 46 while using the electrical component 49.

### (2) Travel support processing

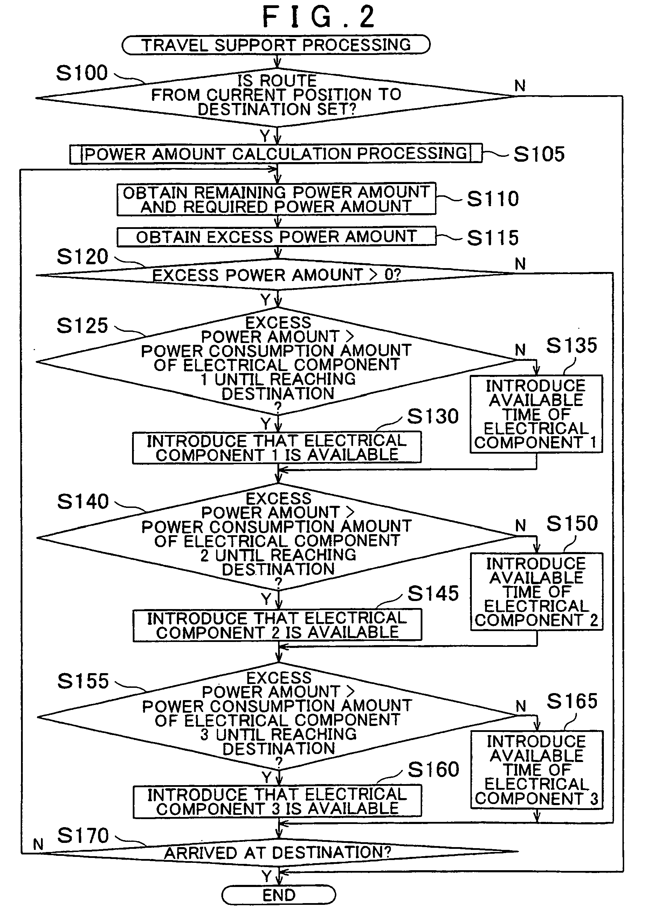

Next, travel support processing implemented by the navigation system 10 in the above structure will be described. FIG. 2 is a flowchart showing the travel support processing. First, the control unit 20 determines whether a route from the current position to a destination is set or not by processing in the required power amount obtaining unit 21a (S100). When it is not determined in S100 that a route is set, the processing in S105 and thereafter is skipped.

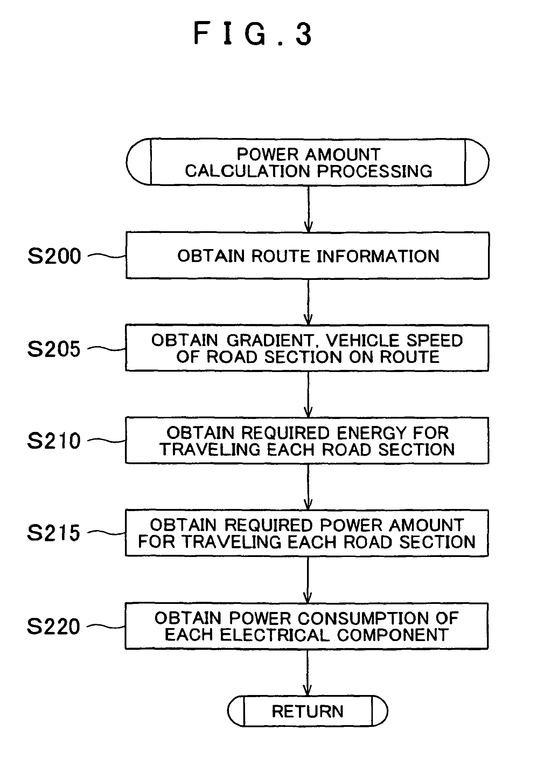

When it is determined in S100 that a route is set, the control unit 20 performs, by processing of the required power amount obtaining unit 21 a, power amount calculation processing to calculate a required power amount in each road section based on relevant route information (S105). FIG. 3 is a flowchart showing the power amount calculation processing. In the power amount calculation processing, the control unit 20 obtains route information indicating the route from the current position to the destination (S200), identifies road sections forming this route, and obtains the gradient of each road section and a speed of the vehicle which is expected in each road section (S205).

Furthermore, the control unit 20 obtains required energy for traveling each road section (S210). Specifically, the control unit 20 obtains the weight of the vehicle and, when the gradient in each road section is the obtained gradient, identifies based on an equation of motion the required energy for moving an object with the same weight as the vehicle at the same speed as the expected vehicle speed in each road section. Then, the control unit obtains the required power amount in the rechargeable battery 46 for outputting this energy based on energy conversion efficiency in the vehicle (S215). Through the above processing, the power amount required for traveling of the vehicle in each road section is identified.

Further, the control unit 20 obtains power consumption of each electrical component which is determined in advance based on the specifications or the like (S220). In addition, in this embodiment, since the electrical component 49 includes the electrical components 1 to 3, power consumption is obtained for each of the electrical components 1 to 3 in S220.

Next, the control unit 20 returns to the flowchart shown in FIG 2, and obtains the remaining power amount in the rechargeable battery 46 and the required power amount for traveling the route from the current position to the destination (S110). That is, the control unit 20 obtains the remaining power amount in the rechargeable battery 46 outputted by the drive control ECU 47, and obtains a cumulative value of the required power amount of every road section identified in S215, which is the required power amount for traveling the route from the current position to the destination.

Furthermore, the control unit 20 obtains the excess power amount (S115). That is, the control unit 20 obtains the lower limit value of the rechargeable battery 46, and identifies the excess power amount as "excess power amount = remaining power amount - required power amount for traveling the route from the current position to the destination - lower limit value of the rechargeable battery 46". Then the control unit 20 determines whether the excess power amount is larger than 0 (zero) or not (S120). When it is not determined in S120 that the excess power amount is larger than 0 (zero), the processing in S 125 and thereafter is skipped.

When it is determined in S 120 that the excess power amount is larger than 0, the control unit 20 determines whether or not the excess power amount is larger than the power consumption amount of the electrical component 1 until reaching the destination (S125). That is, the control unit 20 calculates the power consumption amount to be used when the electrical component 1 continues to be used from the current position to the destination based on the power consumption of the electrical component 1 obtained in above-described S220. The control unit then determines whether or not the excess power amount is larger than the power consumption amount of the electrical component 1.

When it is determined in S125 that the excess power amount is larger than the power consumption amount of the electrical component 1 until reaching the destination, it means that the electrical component 1 can continue to be used while the vehicle travels to the destination by the rechargeable battery 46. Then the control unit 20 introduces that the electrical component 1 is available (S 130). On the other hand, when it is not determined in S125 that the excess power amount is larger than the power consumption amount of the electrical component 1 until reaching the destination, it means that, when the electrical component 1 continues to be used until reaching the destination, the vehicle cannot travel to the destination by the rechargeable battery 46 (the travel cannot be completed in EV mode).

Accordingly, the control unit 20 introduces the available time of the electrical component 1 (S135). That is, the control unit 20 obtains T as the excess power amount = the power consumption of the electrical component 1 × T, takes this T as the available time, and introduces this available time. Of course, when this introduction is performed, the control unit may introduce that the electrical component 1 is not available so as to clearly show that the vehicle cannot travel to the destination by the rechargeable battery 46 if the electrical component 1 continues to be used until reaching the destination.

In this embodiment, for the electrical component 2 and the electrical component 3, the power consumption amounts of the electrical components 2, 3 until reaching the destination are each compared with the excess power amount by the same processing, and information indicating the availability of the electrical components 2, 3 is introduced (the electrical component 2: S S140 to S150; the electrical component 3: S S 155 to S165). Then the control unit 20 determines whether the vehicle has arrived at the destination or not (S170), and repeats the processing in S110 and thereafter until it is determined that the vehicle has arrived at the destination.

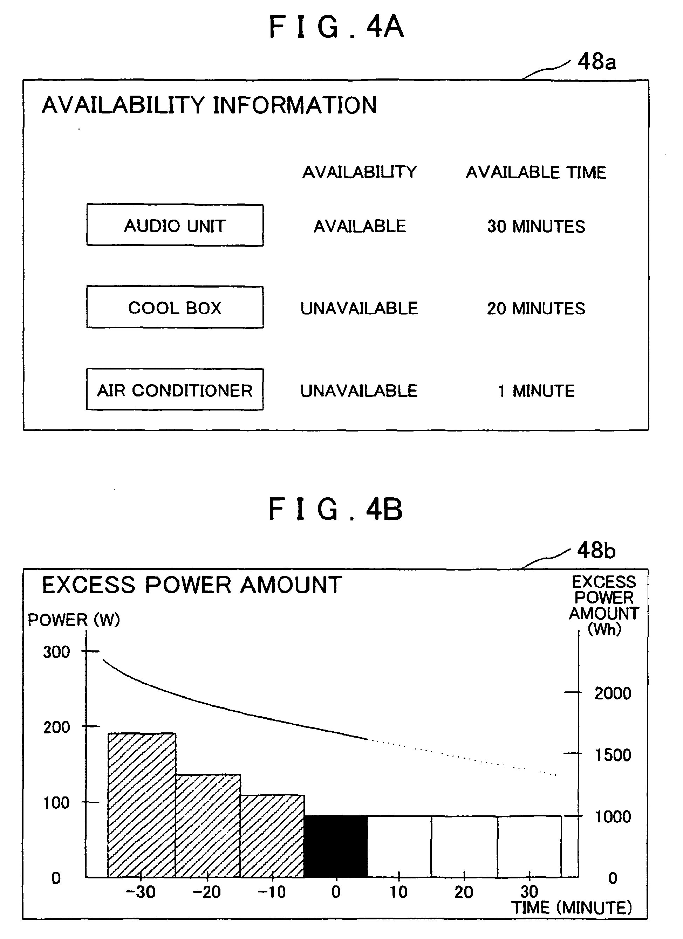

FIG. 4A is a diagram showing an example of introduction in the processing of S S125 to S160. FIG 4A illustrates a screen 48a displayed in a display portion of the user I/F unit 48. In this screen 48a, the names of the electrical components 1 to 3 (in this example, the electrical component 1 is an audio unit, the electrical component 2 is a cool box, and the electrical component 3 is an air conditioner) are listed clearly. For each of the electrical components 1 to 3, the availability is shown as "available" or "unavailable", and the available time is shown for each of the electrical components 1 to 3. Incidentally, here, the availability for each of the electrical components 1 to 3 indicates whether each of the electrical components 1 to 3 can continue to be used or not from the current position to the destination. That is, when the availability of one of the electrical components 1 to 3 is "available", it denotes that it is possible to continue to use this electrical component until reaching the destination. Further, when the availability of one of the electrical components 1 to 3 is "unavailable", it denotes that it is impossible to continue to use this electrical component until reaching the destination.

For example, in the example shown in FIG 4A, it is clearly shown that the audio unit (electrical component 1) can continue to be used until reaching the destination, and that the available time of this audio unit is 30 minutes. Incidentally, since it is clearly shown that the audio unit can continue to be used until reaching the destination, the 30 minutes as the available time are longer than a time until arriving at the destination. Regarding the cool box and the air conditioner (electrical components 2, 3), it is clearly shown that they cannot continue to be used until reaching the destination. It is also shown clearly that the continuous available time is 20 minutes and 1 minute, respectively, if the electrical components continue to be used.

According to the above introduction, the user can identify an available electrical component and an unavailable electrical component (or a maximum available time thereof) when attempting to reach the destination by EV traveling using the rechargeable battery 46. Accordingly, by traveling according to this information, it is possible for the user to surely arrive at the destination by EV traveling without using the internal combustion engine 44. Particularly for plug-in hybrid vehicles, it is often assumed that the rechargeable battery is recharged at a charging facility nearby such as a home, for repeating EV traveling in relatively short distance sections, so as to suppress fuel consumption by the internal combustion engine as far as possible. Therefore, when this embodiment is applied to a plug-in hybrid vehicle, it is possible to introduce to the user an available electrical component and an unavailable electrical component, for allowing traveling by the rechargeable battery without driving the internal combustion engine with fuel. Thus, the convenience in use of the plug-in hybrid vehicle can be improved.

### (3) Other embodiments

The above embodiment is one example for implementing the present invention. Various other embodiments can be adopted as long as they introduce information indicating the availability of electrical components of a vehicle while traveling a predetermined section based on the excess power amount in a rechargeable battery. For example, in the above embodiment, an example of application to a hybrid vehicle is described, but it may be arranged to introduce the information indicating the availability of electrical components in an electric vehicle or the like.

Further, when obtaining a required power amount, it is just needed to identify the required power amount for traveling a predetermined section based on the electric power needed for driving the drive source of the vehicle, excluding power not contributing to driving of the drive source of the vehicle (it is possible for the vehicle to travel without consuming this power). Various techniques can be adopted besides the calculation based on the above-described equation of motion. For example, the number of revolutions and torque of the transfer shaft of the vehicle may be obtained by actual measurement, so as to calculate the required power amount. Furthermore, the predetermined section just needs to be a section between two arbitrary points which the vehicle may travel from the present moment, and may be a section (link or the like) set between two arbitrary points in the above-described route.

Moreover, the current remaining power amount in the rechargeable battery can be obtained by various parameters related to the rechargeable battery corresponding to the remaining power amount. Other than SOC, the remaining power amount may be identified by voltage, current, pH of electrolyte layer, or the like. Furthermore, the excess power amount just needs to be a power amount that can be used for other than driving the drive source of the vehicle, while traveling a predetermined section in the vehicle. Therefore, when it is possible to increase the remaining power amount by regeneration as in a hybrid vehicle, a power amount to be increased by regeneration while traveling a predetermined section is estimated. When the power amount to be increased is recharged in the rechargeable battery, then the power amount that can be used for other than driving the drive source of the vehicle is obtained as the excess power amount.

Further, it may be arranged that one or a combination of the above-described remaining power amount, required power amount, and the excess power amount is obtained again every time the route is changed. Incidentally, in a hybrid vehicle, when a driving plan varies depending on the route or the traffic jam status (the power amount to be charged by regeneration differs), it is preferable to obtain again one or a combination of the above-described remaining power amount, required power amount, and excess power amount for each operation plan.

The information indicating the availability just needs to indicate directly or indirectly that one or more electrical components are available or unavailable while traveling a predetermined section in the vehicle. Therefore, various modes of introduction can be adopted. For example, in above-described FIG 4A, the information for indicating the electrical components are the names of the electrical components, but of course, the electrical components may be shown clearly by icons.

Further, the information indicating the availability of the electrical components may be introduced in association with a predetermined section. For example, it may be introduced that "electrical component X is available until reaching the destination" or the like. Further, it may be introduced that traveling of a predetermined section will be completed without occurrence of insufficiency in remaining power amount in the rechargeable battery when a certain electrical component is not used within the predetermined section, such as introducing "traveling to the destination is possible if electrical component X is not used". Furthermore, it may be introduced that the remaining power amount in the rechargeable battery will be insufficient when a certain electrical component is used in a predetermined section, such as introducing "power is generated because the remaining power amount will be insufficient in middle of the predetermined section" when a certain electrical component X is used. Furthermore, in the case of a hybrid vehicle, introduction associated with power to be charged by regeneration may be performed. For example, it is possible to adopt an arrangement to introduce "power can be retrieved even when electrical component X is used until point Y".

Furthermore, a predicted transition of the excess power amount may be introduced. For example, assuming that the currently used electrical component will continue to be used from the present moment, it is possible to identify a predicted transition of the excess power amount by subtracting the power consumption amount of the electrical component at each time in the future from the excess power amount. Accordingly, when the predicted transition of the excess power amount is introduced, it is possible to identify when the excess power amount becomes insufficient when the currently used electrical component continues to be used from the present moment. Therefore, it is possible to indirectly introduce the availability of this electrical component while traveling the predetermined section.

FIG. 4B shows a screen example (screen 48b) in an arrangement for introducing a predicted transition of the excess power amount. This screen 48b shows transition of the excess power amount in a graph with an abscissa axis being time and an ordinate axis on the right side being the excess power amount. That is, in this graph, the center of the abscissa axis is the current time, the left side is the past, and the right side is the future. A history of the excess power amount is denoted by a solid line, and the predicted transition of the excess power amount is denoted by a dashed line. Incidentally; the history of the excess power amount can be created by saving the value obtained in S115 as shown in FIG 2 every time this step is performed. Further, in FIG. 4B, it is arranged to show the power consumption of the electrical component together with the excess power amount. That is, the ordinate axis on the left side denotes power, indicating the power consumption of the electrical component by a bar graph. The current power consumption (the bar graph colored in black) denotes the power consumption of the currently used electrical component, and the future power consumption (the bar graph colored in white) denotes the same power consumption value as the power consumption of the currently used electrical component. With this display, it is clearly shown that the transition of the excess power amount denoted by the dashed line is the transition of the excess power amount when the currently used electrical component continues to be used. Incidentally, the power consumption of the electrical component in the past is shown by hatching.

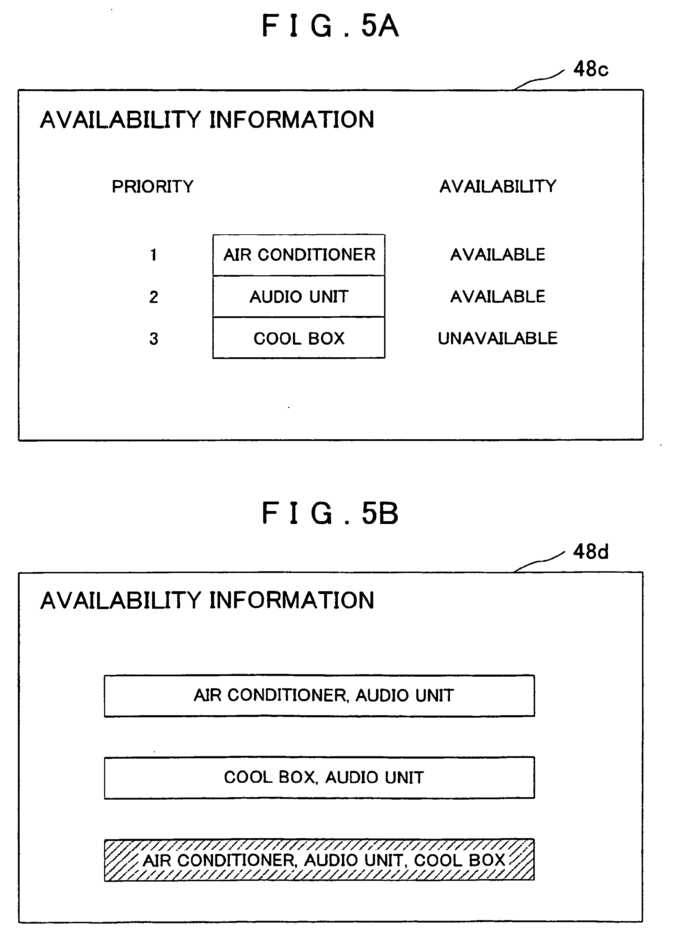

Furthermore, there may be adopted an arrangement to introduce an electrical component which can continue to be used by the excess power amount while traveling a predetermined section in the vehicle. With this arrangement, it is possible to explicitly show the user an available electrical component while traveling a predetermined section (the traveling of the predetermined section can be completed even if this component continues to be used). FIG 5A shows a screen example (48c) arranged to introduce an electrical component which can continue to be used by the excess power based on the priority set in advance with respect to plural electrical components.

In FIG 5A, the priority is set in order of the air conditioner, the audio unit, and the cool box. A combination of the electrical components is made in order from the electrical component with high priority, and there is introduced for the combination whether all the electrical components included in the combination can continue to be used or not by the excess power amount. For example, for the air conditioner with the first priority, it is determined whether the air conditioner can continue to be used or not while traveling a predetermined section. The result thereof is introduced as "available" or "unavailable" ("available" in the example shown in FIG 5A).

Further, for the audio unit with the second priority, a state in combination with the air conditioner with the first priority is assumed. Specifically, it is determined whether or not both the audio unit and the air conditioner can continue to be used by the excess power amount, and the result thereof is introduced as "available" or "unavailable". In the example shown in FIG 5A, there is shown "available", and this means that both the audio unit and the air conditioner can continue to be used while traveling the predetermined section.

Furthermore, "unavailable" is shown for the cool box with the third priority, and this means that the remaining power amount in the rechargeable battery 46 will be insufficient on the way when the predetermined section is traveled while using all of the air conditioner, the audio unit, and the cool box. With the above arrangement, it is possible to clearly show the user how many electrical components in order of priority can be driven by the excess power amount when traveling a predetermined section. Incidentally, the priority just needs to be determined in advance, and may be determined for example by the user in advance, or the priority may be given in order from one having a high frequency of use by the user. The priority may be defined in advance to vary depending on the season, time, or the like (such that the air conditioner is given highest priority in summer). Thus, various arrangements can be adopted.

Furthermore, it may be arranged that for a combination of plural electrical components selected by the user, information indicating the availability while traveling a predetermined section is introduced. Specifically, it is arranged to accept selection of arbitrary electrical components by the user's operation, and introduce whether all the electrical components included in the accepted combination are available or not while traveling a predetermined section. In a screen 48d shown in FIG 5B, whether the electrical components shown in rectangles can continue to be used or not while traveling a predetermined section is denoted by colors of the rectangles. In this example, a white rectangle shows available components, and a hatched rectangle shows unavailable components. This arrangement enables the user to select an available electrical component while traveling a predetermined section. Incidentally, when introducing information indicating the availability for a combination of plural electrical components selected by the user, information indicating the availability for all combinations may be introduced, and besides them, a part thereof is available or unavailable, or the like may be introduced.

## Claims

1. A travel support system, comprising:
a required power amount obtaining unit (21a) that is adapted to obtain a required power amount in a rechargeable battery (46) mounted in a vehicle for traveling a route from a current position of the vehicle to a destination;
a remaining power amount obtaining unit (21b) that is adapted to obtain a current remaining power amount in the rechargeable battery (46);
an excess power amount obtaining unit (21c) that is adapted to obtain an excess power amount in the rechargeable battery (46) when the route from the current position of the vehicle to the destination is traveled, based on the required power amount and the remaining power amount; and
an introduction unit (21d) that is adapted to introduce information indicating the availability of an electrical component (49) of the vehicle while traveling the route from the current position of the vehicle to the destination, based on the excess power amount.

2. The travel support system according to claim 1, wherein
the introduction unit (21d) is adapted to introduce a name and available time of the electrical component (49).

3. The travel support system according to claim 1 or 2, wherein
the excess power amount obtaining unit (21c) is adapted to obtain a predicted transition of the excess power amount when a currently used electrical component (49) continues to be used; and
the introduction unit (21d) is adapted to introduce the predicted transition of the excess power amount.

4. The travel support system according to any one of claims 1 to 3, wherein
the introduction unit (21d) is adapted to introduce an electrical component (49) which continues to be used by the excess power amount while traveling the

5. The travel support system according to any one of claims 1 to 4, wherein
the availability is the availability with respect to a combination of a plurality of the electrical components (49) selected by a user.

6. A travel support method, comprising the steps of:
obtaining a required power amount in a rechargeable battery (46) mounted in a vehicle for traveling a route from a current position of the vehicle to a destination;
obtaining a current remaining power amount in the rechargeable battery (46);
obtaining an excess power amount in the rechargeable battery (46) when the route from the current position of the vehicle to the destination is traveled, based on the required power amount and the remaining power amount; and
introducing information indicating the availability of an electrical component (49) of the vehicle while traveling the route from the current position of the vehicle to the destination, based on the excess power amount.

7. A travel support program comprising program code which, when run on a computer causes the computer to realize the steps of method claim 6.

## Patentansprüche

1. Fahrunterstützungssystem, mit:
einer Benötigter-Leistungsbetrag-Erhalteeinheit (21 a), die zum Erhalten eines benötigten Leistungsbetrags in einer aufladbaren Batterie (46), die in einem Fahrzeug befestigt ist, zum Fahren einer Route von einer gegenwärtigen Position des Fahrzeugs zu einem Ziel angepasst ist,
einer Restleistungsbetrag-Erhalteeinheit (21 b), die zum Erhalten eines gegenwärtigen Restleistungsbetrags in der aufladbaren Batterie (46) angepasst ist,
einer Überschüssiger-Leistungsbetrag-Erhalteeinheit (21c), die zum Erhalten eines überschüssigen Leistungsbetrags in der aufladbaren Batterie (46), wenn die Route von der gegenwärtigen Position des Fahrzeugs zu dem Ziel gefahren wird, basierend auf dem benötigten Leistungsbetrag und dem Restleistungsbetrag angepasst ist, und
einer Einführeinheit (21 d), die zum Einführen von Information angepasst ist, die die Verfügbarkeit einer elektrischen Komponente (49) des Fahrzeugs während dem Fahren der Route von der gegenwärtigen Position des Fahrzeugs zu dem Ziel angibt, basierend auf dem überschüssigen Leistungsbetrag.

2. Fahrunterstützungssystem nach Anspruch 1, bei dem:
die Einführeinheit (2 1 d) zum Einführen eines Namens und einer verfügbaren Zeit der elektrischen Komponente (49) angepasst ist.

3. Fahrunterstützungssystem nach Anspruch 1 oder 2, bei dem:
die Überschüssiger-Leistungsbetrag-Erhalteeinheit (21c) zum Erhalten eines vorhergesagten Übergangs des überschüssigen Leistungsbetrags, wenn eine gegenwärtig verwendete elektrische Komponente (49) weiterhin verwendet wird, angepasst ist, und
die Einführeinheit (21 d) zum Einführen des vorhergesagten Übergangs des überschüssigen Leistungsbetrags angepasst ist.

4. Fahrunterstützungssystem nach einem der Ansprüche 1 bis 3, bei dem:
die Einführeinheit (21d) zum Einführen einer elektrischen Komponente (49), die weiterhin mittels des überschüssigen Leistungsbetrags während dem Fahren der Route von der gegenwärtigen Position des Fahrzeugs zu dem Ziel verwendet wird, angepasst ist.

5. Fahrunterstützungssystem nach einem der Ansprüche 1 bis 4, bei dem:
die Verfügbarkeit die Verfügbarkeit bezüglich einer Kombination einer Mehrzahl elektrischer Komponenten (49), die von einem Benutzer ausgewählt werden, ist.

6. Fahrunterstützungsverfahren mit den folgenden Schritten:
Erhalten eines benötigten Leistungsbetrags in einer aufladbaren Batterie (46), die in einem Fahrzeug befestigt ist, zum Fahren einer Route von einer gegenwärtigen Position des Fahrzeugs zu einem Ziel,
Erhalten eines gegenwärtigen Restleistungsbetrags in der aufladbaren Batterie (46),
Erhalten eines überschüssigen Leistungsbetrags in der aufladbaren Batterie (46), wenn die Route von der gegenwärtigen Position des Fahrzeugs zu dem Ziel gefahren wird, basierend auf dem benötigten Leistungsbetrag und dem Restleistungsbetrag, und
Einführen von Information, die die Verfügbarkeit einer elektrischen Komponente (49) des Fahrzeugs während dem Fahren der Route von der gegenwärtigen Position des Fahrzeugs zu dem Ziel angibt, basierend auf dem überschüssigen Leistungsbetrag.

7. Fahrunterstützungsprogramm mit Programmcode, der, wenn er auf einem Computer ausgeführt wird, bewirkt, dass der Computer die Schritte des Verfahrens nach Anspruch 6 realisiert.

## Revendications

1. Système d'assistance de voyage, comprenant:
une unité (21a) d'obtention d'énergie requise qui est à même d'obtenir une quantité d'énergie requise dans une batterie rechargeable (46) montée dans un véhicule pour parcourir une route d'une position courante du véhicule à une destination ;
une unité (21b) d'obtention de la quantité d'énergie restante qui est à même d'obtenir une quantité d'énergie courante restante dans la batterie rechargeable (46) ;
une unité (21c) d'obtention de quantité d'énergie excédentaire qui est à même d'obtenir une quantité d'énergie excédentaire dans la batterie rechargeable (46) lorsque la route de la position courante du véhicule à la destination est parcourue sur la base de la quantité d'énergie requise et de la quantité d'énergie restante ; et
une unité d'introduction (21d) qui est à même d'introduire des informations indiquant la disponibilité d'un composant électrique (49) du véhicule au cours du parcours de la route de la position courante du véhicule à la destination sur la base de la quantité d'énergie excédentaire.

2. Système d'assistance de voyage selon la revendication 1, dans lequel:
l'unité d'introduction (21d) est à même d'introduire un nom et un temps disponible du composant électrique (49).

3. Système d'assistance de voyage selon la revendication 1 ou 2, dans lequel:
l'unité (21c) d'obtention de la quantité d'énergie excédentaire est à même d'obtenir une transition prédite de la quantité d'énergie excédentaire lorsqu'un composant électrique (49) couramment utilisé continue à être utilisé ; et
l'unité d'introduction (21d) est à même d'introduire la transition prédite de la quantité d'énergie excédentaire.

4. Système d'assistance de voyage selon l'une quelconque des revendications 1 à 3, dans lequel:
l'unité d'introduction (21d) est à même d'introduire un composant électrique (49) qui continue à être utilisé par la quantité d'énergie excédentaire tout en parcourant la route de la position courante du véhicule à la destination.

5. Système d'assistance de voyage selon l'une quelconque des revendications 1 à 4, dans lequel :
la disponibilité est la disponibilité par rapport à une combinaison d'une pluralité des composants électriques (49) choisis par un utilisateur.

6. Procédé d'assistance de voyage, comprenant les étapes consistant à :
obtenir une quantité d'énergie requise dans une batterie rechargeable (46) montée dans un véhicule pour parcourir une route d'une position courante du véhicule à une destination ;
obtenir une quantité d'énergie courante restante dans la batterie rechargeable (46) ;
obtenir une quantité d'énergie excédentaire dans la batterie rechargeable (46) lorsque la route de la position courante du véhicule à la destination est parcourue sur la base de la quantité d'énergie requise et de la quantité d'énergie restante ; et
introduire des informations indiquant la disponibilité d'un composant électrique (49) du véhicule tout en parcourant la route de la position courante du véhicule à la destination sur la base de la quantité d'énergie excédentaire.

7. Programme d'assistance de voyage comprenant un code de programme qui, lorsqu'il est tourne sur un ordinateur, amène celui-ci à réaliser les étapes de la revendication de procédé 6.
